# EUROPEAN PATENT APPLICATION

(11) **EP 1 453 017 A2**
(43) Date of publication of application: **01.09.2004**
(21) Application number: 04386003.0
(22) Date of filing: 30.01.2004
(51) Int. Cl.: G07F 11/58, G07F 13/10, B65G 17/00, B65G 47/51

(54) **Conveyor for successive dispensation of packaged consumer products with carriage of respective geometry**

(30) Priority: 30.01.2003 GR 2003100044
(71) Applicant: Frigoglass Commercial Refrigeration S.A.I.C., Maroussi, Attika (GR)
(72) Inventor: Smyrnis, Georgios, Patra (GR); Papayiannidis, Paschalis, Patra (GR)
(74) Representative: Masoulas, Athanasios V.

(57) **Abstract**

The chamber in which products are moving, consists of two sections (C, D) who constitute the internal cabin and the guide for the motion and the rotation mechanism which consists of a motor (7), an upper shaft (13), a lower shaft (12), four transmition shaft components (6), four rings (15), four bushings (3), four steel bushings (5), two pulleys (10), one pulley (8), one pulley (11), one pulley (9), one motor bearing (4), four rings (14) and two belts (1,2).

A chamber having the ability of product feeding according to the present invention has many advantages. It is not voluminous, it is light enough and serves the needs of in series feeding and the principle of function first in ― first out.
The individual design of the feeding mechanism minimizes the demanding mechanical components, as drive chains, metallic conveyors. All the moving parts and related components are made of plastic according to the design, has the result of the important weight reduction of the feeding mechanism.

## Description

The invention regards a chamber having the capability of successive disposal of packaged consumer products with a carriage of respective geometry.

The existing product feeding mechanisms are voluminous and they do not serve the needs of in series feeding and the principle of the function first in - first out.

The present invention has the target of creating a chamber that can move the products towards an exit serving point and provide access to a particular product.

According to the invention, it is achieved with a chamber type that is described above, by the addition of the mechanical transmition system, in a way that the products move in the internal of the chamber, simultaneously with the promotion towards the exit / serving position during the mechanisms' motion. The chamber is fed automatically in the empty position with products from the products micro chamber storage. This way the operator of the conveyor has to pay attention and feed at will with new products the products micro chamber storage. This way, the continuous feeding of the chamber is ensured.

A chamber having the ability of product feeding according to the present invention has many advantages. It is not voluminous, it is light enough and it serves the needs of in series feeding and the principle of function first in - first out.
The particular design of the mechanism minimizes the demanding mechanical components, as i.e. drive chains, metallic conveyors. All the moving parts and related components are made of plastic according to the design, resulting of in important weight reduction of the feeding mechanism. At the same time, the specific design having the product's conveyor being the main components of it, and the movement's geometry defined by the chamber's shell, leads to the minimum demand of space proportionally to the number of carrying products. All the above mentioned appoint the mechanism especially easy to use, while the product is moved easily, making the frequent movement and repositioning easy. The use of plastic as the basic constructive material and the production methods utilized (injection, Reaction Injection, Molding) allow an important comparative reduction in the construction cost.

### The invention described below with references the attached drawings, in which:

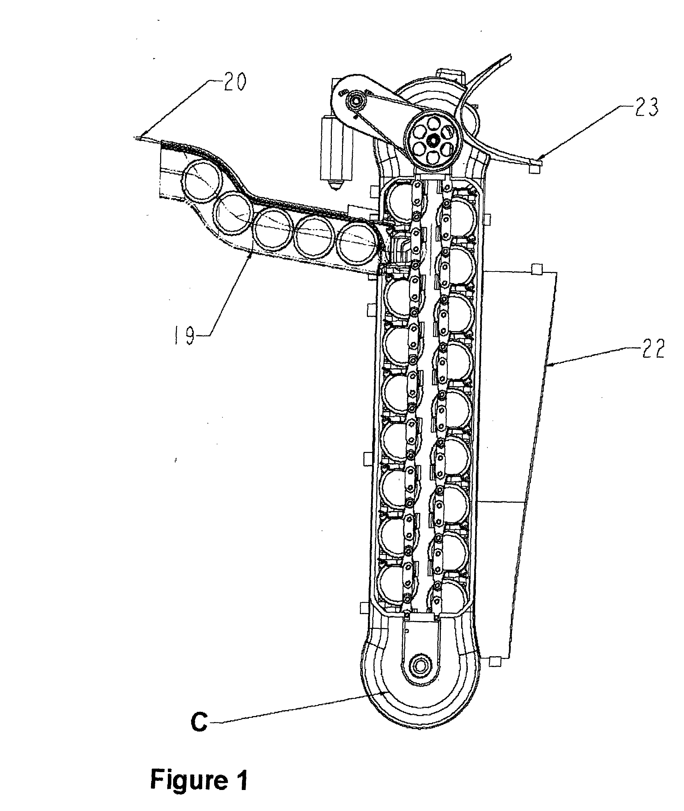

Figure 1 shows a side view of the assembled chamber, according to the invention.

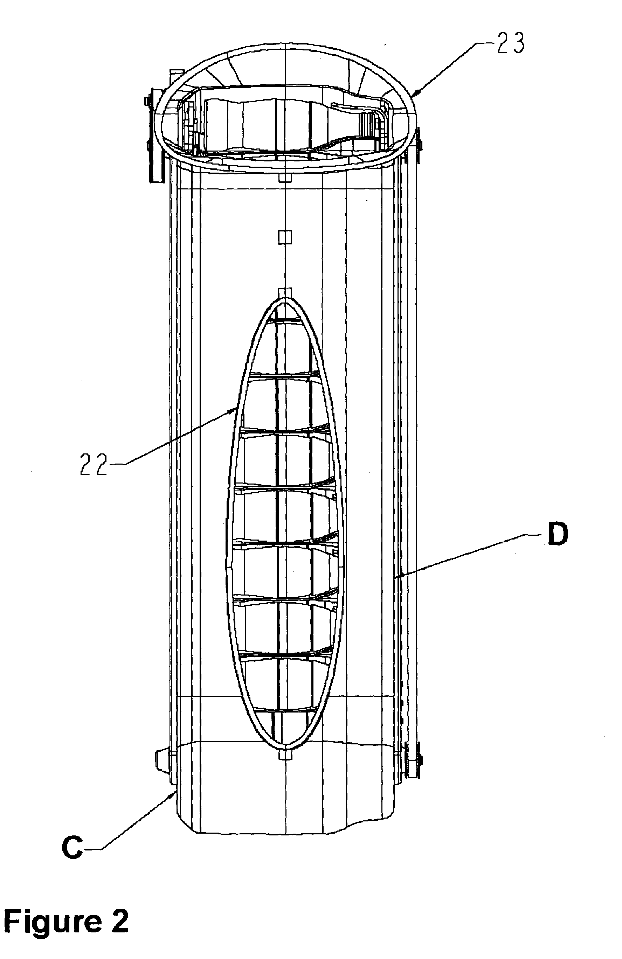

Figure 2 shows a front view of the chamber, according to the invention.

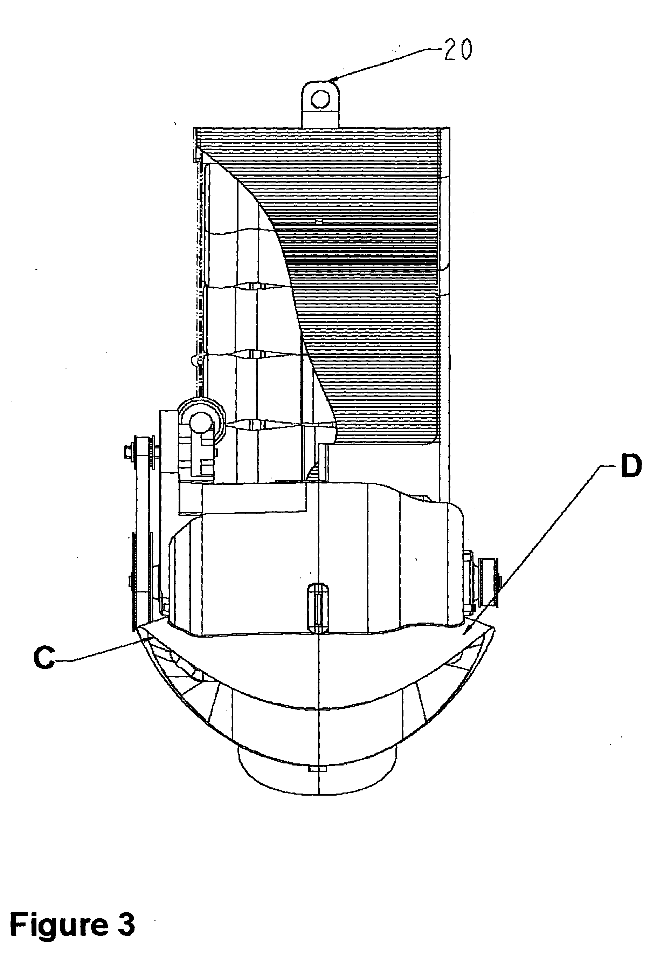

Figure 3 shows a top view of the chamber, according to the invention.
Figure 4 shows an assembly drawing depicting, according to the invention, all the components that constitute the mechanical transmition system in the chamber.
Figure 5 shows an assembly drawing depicting, according to the invention, all the components that constitute the products' reception and transportation system, i.e. bottles.
Figure 6 shows a drawing depicting, according to the invention, the motion of the products' reception and transportation system.
Figure 7 shows a drawing depicting, according to the invention, the product's micro chamber storage that feeds the chamber with products.
Figure 8 shows a drawing depicting, according to the invention, the tracing or / the movement or / the presence or / the position of product's mechanisms in the chamber.
Figure 9 shows a drawing depicting, according to the invention, the ability of the mechanism to rotate via one driving shaft.
Figure 10 shows a drawing depicting, according to the invention, the ability of the conveyor to receive various packaged consumer products without any change in the constructive geometry.
Figure 11 shows a drawing depicting, according to the invention, the ability of the conveyor to receive various packaged consumer products without any required change in its constructive geometry.

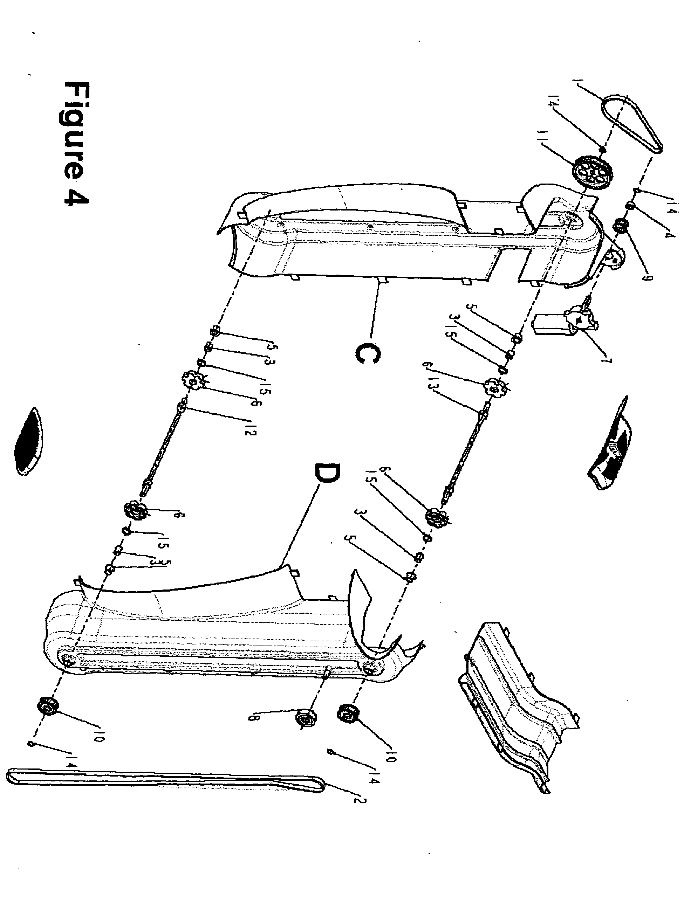

Each chamber includes two sections (C, D) which constitute the internal cabin / chamber's shell (Figure 4). These two sections (C, D) are connected to each other while the mechanical transmition system binds on them in the chamber (Figure 4). The mechanical transmition system suggestively consists of: a motor (7), an upper shaft (13), a lower shaft (12), four transmition shaft components (6), four rings (15), four bushings (3), four steel bushings (5), two pulleys (10), one pulley (8), one pulley (11), one pulley (9), one motor bearing (4), four rings (14) and two belts (1,2) (Figure 4).

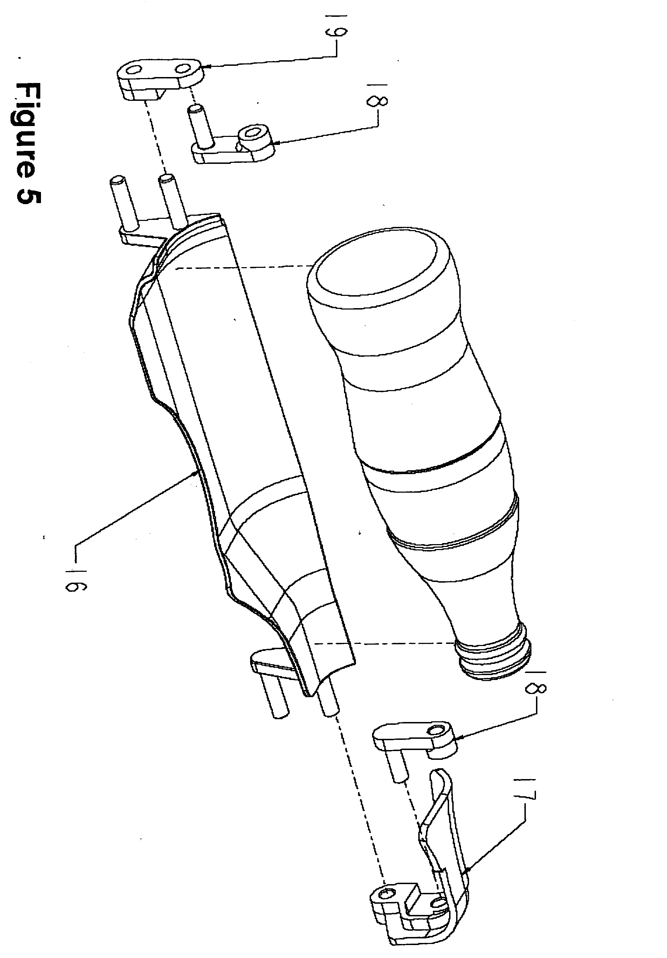

The internal of the chamber is especially designed so as to constitute the conveyor's motion guide (16), which conveyors are connected to each other with pins (18, 19) (Figure 5). At the same time, the proper internal formation serves as the feeding system's motion guide, in precise trajectory, as dictated from the formation of the internal surface.

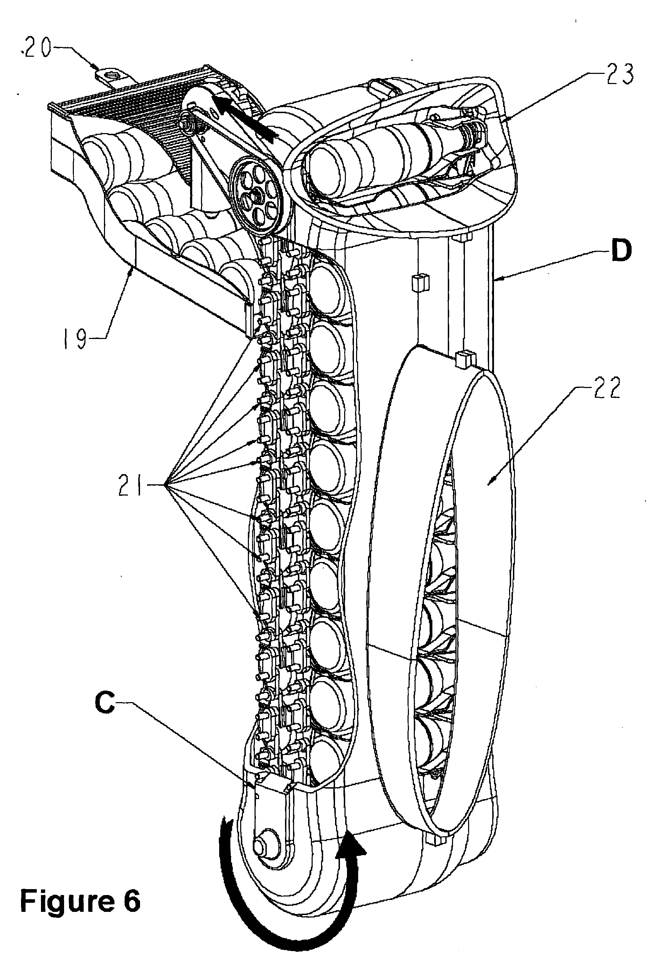

Loading of products takes place from the rear side of the chamber and in the point where the products micro chamber storage is connected. The products are served and on the bases / conveyors (Figure 4, 6).

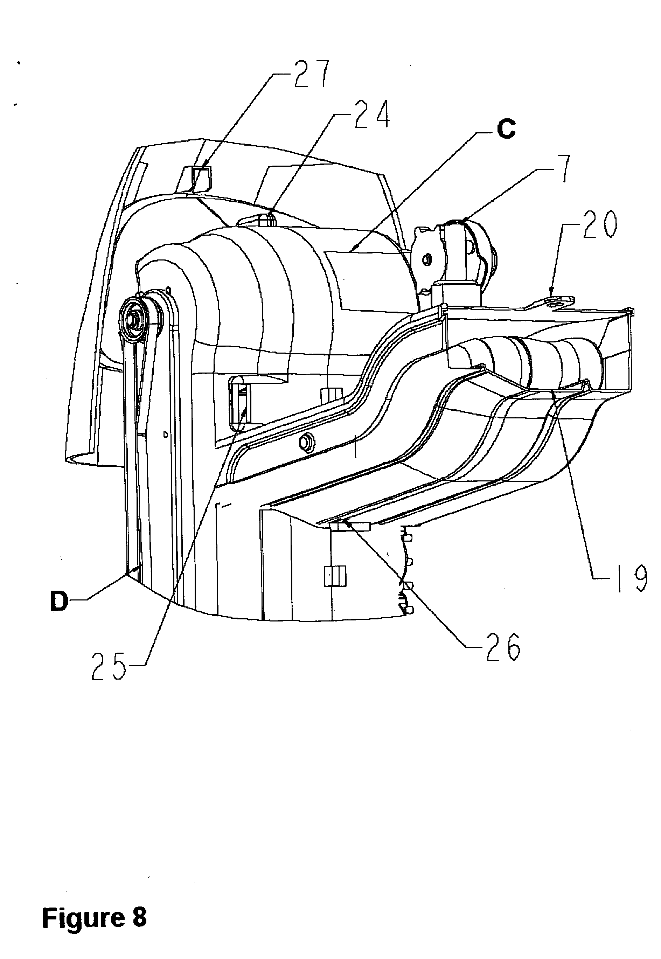

The mechanical transmition's motor (7) is activated by the tracing / movement / presence / position of product's mechanisms (24, 25, 26, 27) (Figure 8) and the central control device, every time the chamber's cover opens a product is removed and the cover closes. Next, the gear pulls the product's conveyors / bases initiating the motion of chamber's mechanism by the upper shaft (13) through the pulley (11). At the same time, the motion may be transmitted also to a lower shaft (12) through the pulley (10) and the belt (2) supporting the conveyor's (21) motion if products' weight demands it (Figure 4, 6).

Closing the chamber's cover, the transmition system using the motor (7) drives the bases' (16) conveyor, which bases are connected to each other with pins (18, 19, 17), to the next / not empty product serving position (Figure 5). Tracing of empty positions / conveyors by the feeding mechanism, is automatic and defined by the software controlling function of the microprocessor / central control device by processing the entries by the tracing / movement / presence / position of product's mechanism (Figure 8).

The product reception base which is at the same time a product transportation conveyor, suggestively consists of a reception and holding base of the product (16), two connecting conveyors having the arrangement of a pin ―pin reception hole (18), a connecting conveyor having the arrangement of pin reception hole - pin reception hole (19) and a connecting conveyor having the arrangement of pin reception hole-pin reception hole and formation at the upper side for holding the product i.e. bottle (17) (Figure 5).

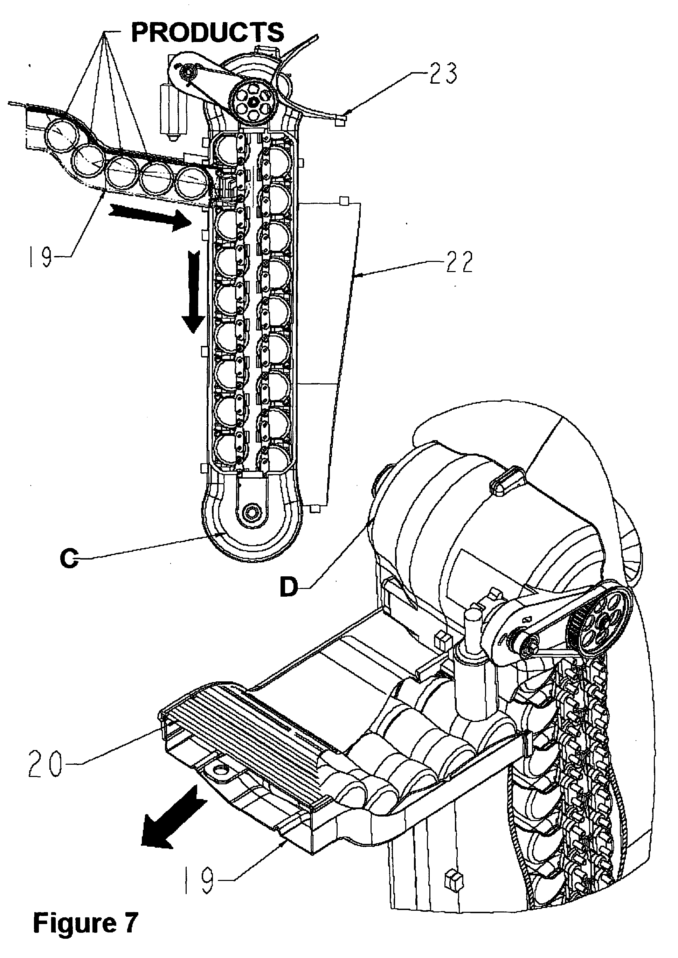

The entrance of the product's waiting micro chamber is placed at the rear side of the chamber (C, D) (Figure 7) and consists of the products' waiting micro chamber (20) which prevents the entrance of a product in the chamber during the selective feeding process.

During the closing of the entrance cover (20) which prevents the entrance of the product at the moment of feeding, products due to the slope of the product waiting vessel (19) slide due to gravity and fill in place the empty (if there is any) position on the product transportation conveyor (Figure 7).

The transition of the products from the product waiting vessel (19) to the transportation conveyor (21), is checked by the tracing / movement / presence / position of product's mechanism (26) which is stimulated every time a product enters the product transportation conveyor (21). This informs the central control device / microprocessor about how many products were driven into the chamber through the mentioned entrance point (Figure 6).

The product transportation conveyor (Figure 6), according to the invention, moves inside guides manufactured according to the chamber's geometry (C, D) (Figure 4).

The other parts (16, 17, 18, 19) (Figure 5) which constitute according to the invention, the transportation conveyor (21) (Figure 6), are assembled in such a way to allow the smooth and without problems motion inside the chamber (C, D) (Figure 4).

The chamber according to the invention is possible to have different shaft supporting arrangement (13, 12) and shape occasionally, as well as the transmition's motor (7) can be placed either on the upper shaft (13) or on the lower shaft (12) (Figure 4).

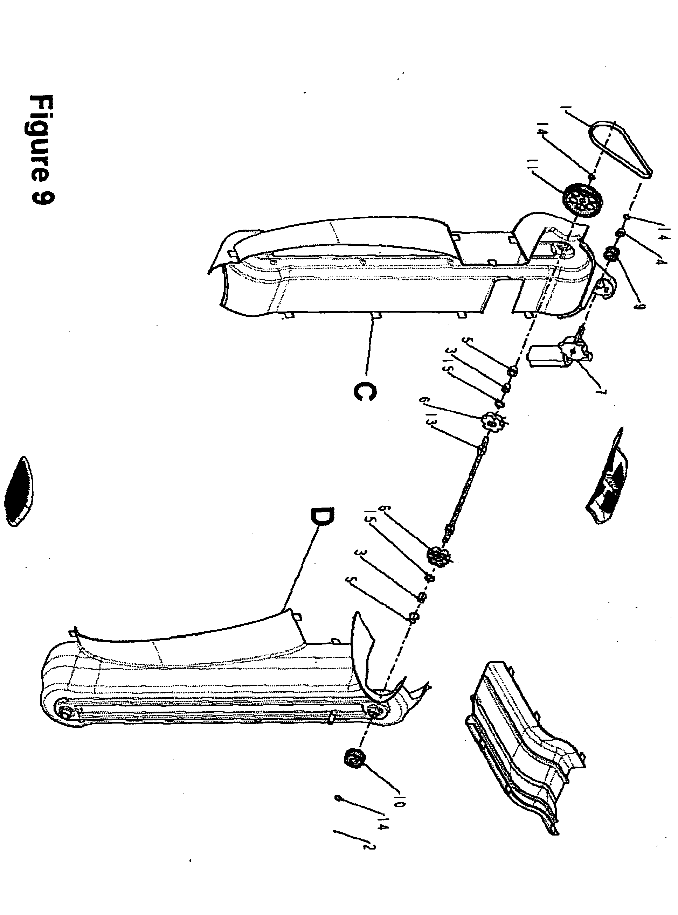

The chamber according to the invention is able to operate having one transmition shaft (13) as well as having one transmition belt (1) (Figure 9) depending on the application of the packaged consumer product.

The chamber according to the invention has an especial product display formation (22) as well as a reception cavity (23) (Figure 6).

The chamber according to the invention is lightened at the display formation points, displaying the products (22), at the reception cavity (23) (Figure 6).

The motor (7) of the mechanical transmition system according to the invention, is activated by the tracing / movement / presence / position of product's mechanisms (24, 25, 26, 27) (Figure 8) and the central control device / microprocessor, every time the chamber's cover is able to be opened by a controlling releasing mechanism (slot machine), a product is removed and the chamber's cover closes.

The motor (7) of the mechanical transmition system according to the invention, is activated by the fiber optic sensors (24, 25, 26, 27) (Figure 8) and the central control device / microprocessor, every time the chamber's cover opens, a product is removed and the chamber's cover closes.

The motor (7) of the mechanical transmition system according to the invention, is activated by the contact sensors (24, 25, 26, 27) (Figure 8) and the central control device / microprocessor, every time the chamber's cover opens, a product is removed and the chamber's cover closes.

The motor (7) of the mechanical transmition system according to the invention, is activated by the photocell sensors (24, 25, 26, 27) (Figure 8) and the central control device / microprocessor, every time the chamber's cover is able to be opened by a controlling releasing mechanism (slot machine), a product is removed and the chamber's cover closes.

The motor (7) of the mechanical transmition system according to the invention, is activated by the fiber optic sensors (24, 25, 26, 27) (Figure 8) and the central control device / microprocessor, every time the chamber's cover is able to be opened by a controlling releasing mechanism (slot machine), a product is removed and the chamber's cover closes.

The transition of the products from the product micro chamber storage (19) into the transportation (21) (Figure 7) is checked by contact sensor (26), which is activated every time a product enters the transportation conveyor (21). This has the result of informing the central control device about how many products passed through the mentioned feeding position (Figure 7).

The transition of the products from the product micro chamber storage (19) into the transportation conveyor (21) (Figure 7) is checked by fiber optic sensor (26) which is activated every time a product enters the transportation conveyor (21). This has the result of informing the central control device about how many products passed through the mentioned feeding position (Figure 7).

The transition of the products from the product micro chamber storage (19) into the transportation conveyor (21) (Figure 7) is checked by photocell sensor (26) which is activated every time a product enters the transportation conveyor (21). This has the result of informing the central control device about how many products passed through the mentioned feeding position (Figure 7).

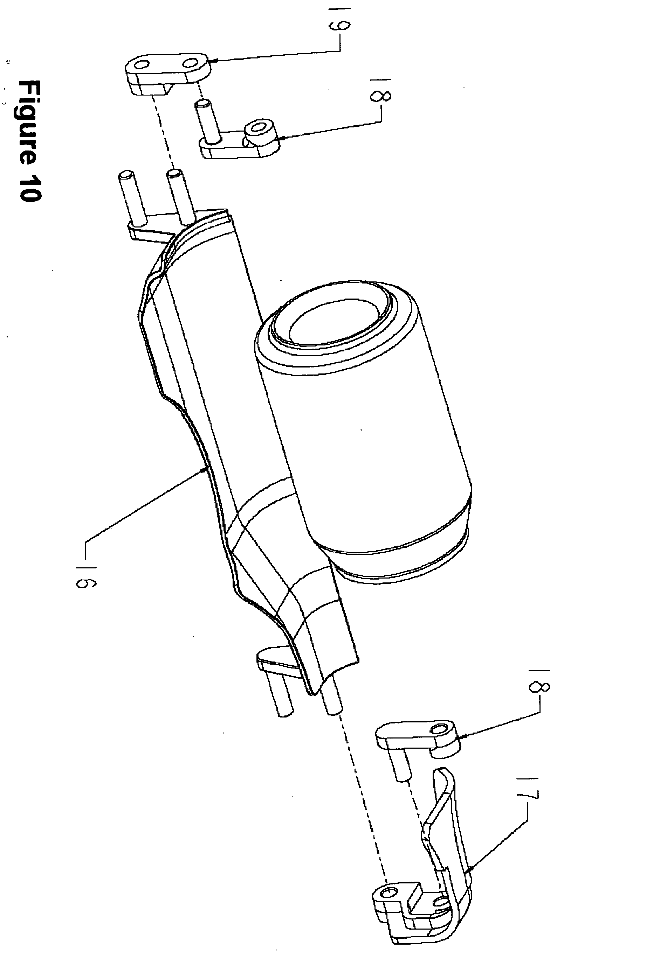

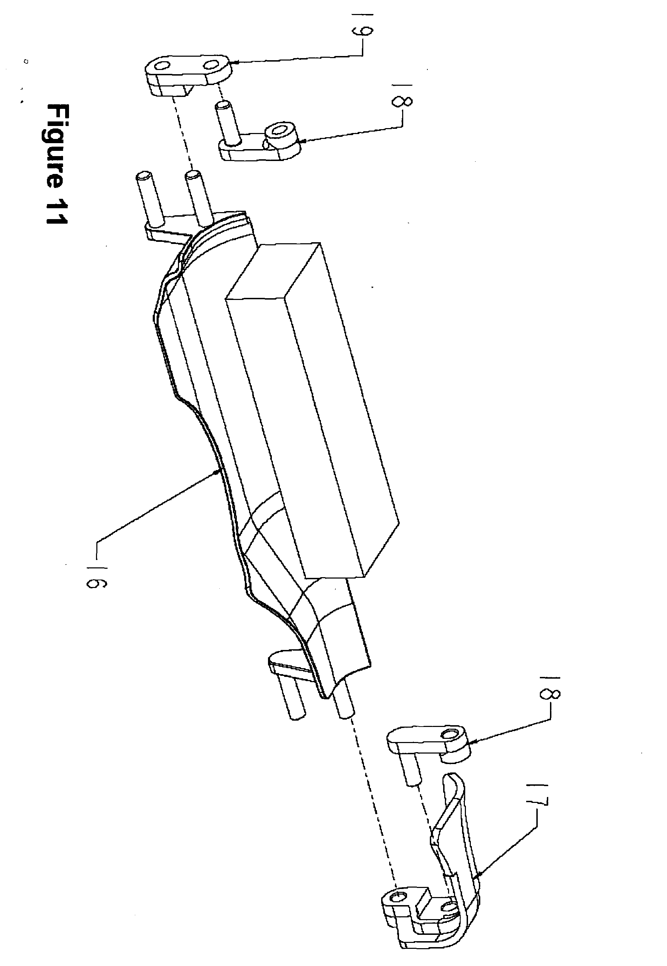

The product reception base (16) according to the invention is able to support also other products without any change in the constructive geometry (packaged industrial products, foods, drinks) (Figure 10, 11).

The product transportation conveyor (Figure 6) according to the invention moves into guides which are formed on the internal geometry of the chamber (C, D) (Figure 4). The result is that the product transportation guide is driven on a specific trajectory with predetermined rotation.
Chamber's geometry is independent from the outer shell which includes the geometry. It is able to be used for wide support of different packaged consumer products without any change in the geometry of the transportation base / conveyor (16) (Figure 5). However the transportation conveyor / base is able o have multiple geometrical approaches so as be able to serve many other industrial products having complex geometry or and packaging (Figure 10, 11).

The tracing / movement / presence / position of product's mechanisms (25, 25, 26, 27) according to the invention are placed spatially in reference places, so as to allow the reliable and direct informing of the central control device / microprocessor for the operation of the chamber (Figure 8). The tracing / movement / presence / position of product's mechanism (24) traces and informs the central control device / microprocessor for the removal or not of a product from the product waiting position. The tracing / movement / presence / position of product's mechanism (25) checks and informs the central control device / microprocessor if the product reception base (16) in the removal position of it and the product reception base (16) in the feeding position of it, are in absolute correspondence. The tracing / movement / presence / position of product's mechanism (26), which is placed into the feeding storage, checks and informs the central control device / microprocessor if a product has entered the product transportation conveyor (21). The tracing / movement / presence / position of product's mechanism (27) checks and informs the central control device / microprocessor every time the chamber's cover -which is placed on the product removal position - opens activating the motor transmitting the motion to the upper shaft (13) through the pulley (11). At the same time the motion also may be transmitted to the lower shaft (12) through the pulley (10) and the belt (2) supporting the motion of the transportation conveyor (21) if the product's weight demand it (Figure 4, 6).

The contact sensors (24, 25, 26, 27) according to the invention are placed spatially in reference places so that to allow the reliable and direct informing of the central control device / microprocessor for the operation of the chamber (Figure 8). The contact sensor (24) traces and informs the central control device / microprocessor for the removal or not of a product from the product waiting position. The contact sensor (25) checks and informs the central control device / microprocessor if the product reception base (16) in the removal position of it and the product reception base (16) in the feeding position of it, are in absolute correspondence. The feeding contact sensor (26) which is placed into the feeding micro chamber checks and informs the central control device / microprocessor if a product has entered the product transportation conveyor (21). The contact sensor (27) checks and informs the central control device / microprocessor every time the chamber's cover - which is placed on the product removal position - opens activating the motor transmitting the motion to the upper shaft (13) through the pulley (11). At the same time the motion also may be transmitted to the lower shaft (12) through the pulley (10) and the belt (2) supporting the motion of the transportation conveyor (21) if product's weight demand (Figure 4, 6).

The fiber optic sensors (24, 25, 26, 27) according to the invention are placed spatially in reference places so that to allow the reliable and direct informing of the central control device / microprocessor for the operation of the chamber (Figure 8). The fiber optic sensor (24) traces and informs the central control device / microprocessor for the removal or not of a product from the product waiting position. The fiber optic sensor (25) checks and informs the central control device / microprocessor if the product reception base (16) in the removal position of it and the product reception base (16) in the feeding position of it, are in absolute correspondence. The feeding fiber optic sensor (26) which is placed into the feeding micro chamber checks and informs the central control device / microprocessor if a product has entered the product transportation conveyor (21). The fiber optic sensor (27) checks and informs the central control device / microprocessor every time the chamber's cover - which is placed on the product removal position - opens activating the motor transmitting the motion to the upper shaft (13) through the pulley (11). At the same time the motion also may be transmitted to the lower shaft (12) through the pulley (10) and the belt (2) supporting the motion of the transportation conveyor (21) if the product's weight demands it (Figure 4, 6).

The photocell sensors (24, 25, 26, 27). according to the invention are placed spatially in reference places so as to allow the reliable and direct informing of the central control device / microprocessor for the operation of the chamber (Figure 8). The photocell sensor (24) traces and informs the central control device / microprocessor for the removal or not of a product from the product waiting position. The photocell sensor (25) checks and informs the central control device / microprocessor if the product reception base (16) in the removal position of it and the product reception base (16) in the feeding position of it, are in absolute correspondence. The feeding photocell sensor (26) which is placed into the feeding micro chamber checks and informs the central control device / microprocessor if a product has entered the product transportation conveyor (21). The photocell sensor (27) checks and informs the central control device / microprocessor every time the chamber's cover - which is placed on the product removal position - opens activating the motor transmitting the motion to the upper shaft (13) through the pulley (11). At the same time the motion also may be transmitted to the lower shaft (12) through the pulley (10) and the belt (2) supporting the motion of the transportation conveyor (21) if the product's weight demand it (Figure 4, 6).

The products that are for consumption and placed into the chamber are able to be maintained at low (freezing) or high (heating) temperature depending on the demand of preservation or / and consumption of these products. This is achieved by fitting and connecting on the chamber of a freezing or a heating mechanism system. The temperature controlling mechanism is the process and the forced circulation of the air in the feeding chamber.

## Claims

1. Conveyor for successive disposal of packaged consumer products with carriage of respective geometry, which includes a mechanical transmition system, which includes suggestively a motor (7), an upper shaft (13), a lower shaft (12), four transmition shaft components (6), four rings (15), four bushings (3), four steel bushings (5), two pulleys (10), one pulley (8), one pulley (11), one pulley (9), one motor bearing (4), four rings (14) and two belts (1,2) (Figure 4) and is **characterized by** the fact that includes the mechanical transmition system in such way as to move the bases on which are placed the products. The internal of the chamber is especially formed in such way, being the conveyor's movement guide (16), which bases are connected to each other with pins (18,19) (Figure 5). At the same time, the proper internal formation serves as a feeding system's movement guide, in absolute precise trajectory, as it is represented from the formation of the internal surface.

2. The product reception base/conveyor is at the same time a product transportation conveyor, which consists of a reception and holding base of the product (16), two connecting conveyors having the arrangement of a pin-pin reception hole (18), a connecting conveyor having the arrangement of pin reception hole - pin reception hole (19) and a connecting conveyor having the formation of pin reception hole-pin reception hole and formation at the upper side for holding the product, i.e. bottle (Figure 5).

3. The entrance of the products' waiting micro chamber is placed at the rear side of the chamber (C, D) and consists of the products' waiting vessel (19) and the entrance cover (20) which rolls onto guides which prevent the entrance of a product in the chamber during the feeding.
During the closing of the entrance cover (20) which prevents the entrance of the product at the moment of the feeding, products due to the slope of the product waiting vessel (19) slide forced due to the gravity and take place the empty (if there is any) position on the product transportation conveyor (Figure 7). The transition of the products from the product waiting micro chamber (19) to the transportation conveyor (21) is controlled by the tracing / movement / presence / position of product's mechanism (26) which is activated every time a product enters into the product transportation conveyor (21). This results in the informing of the central control device / microprocessor about how many products fed the chamber through the mentioned entrance position.

4. The chamber as it is described in the requirement 1, 2, of the products' waiting micro chamber as it is described in the requirement 3. The motor (7) of the mechanical transmition system, of the chamber is activated by the tracing / movement / presence / position of product's mechanisms (24, 25, 26, 27) (Figure 8) and the central control device / microprocessor, every time the chamber's cover opens by a controlling releasing mechanism (slot machine), a product is removed and the chamber's cover closes.

5. The chamber as it is described in the requirement 1, 2, the entrance of the waiting for feeding products' micro chamber as it is described in the requirement 3. The motor (7) of the mechanical transmition system, of the chamber is activated by the contact sensors (24, 25, 26, 27) (Figure 8) and the central control device / microprocessor, every time the chamber's cover opens by a controlling releasing mechanism (slot machine), a product is removed and the chamber's cover closes.

6. The chamber as it is described in the requirement 1, 2, the entrance of the waiting for feeding products' micro chamber as it is described in the requirement 3. The motor (7) of the mechanical transmition system, of the chamber is activated by the fiber optic sensors (24, 25, 26, 27) (Figure 8) and the central control device / microprocessor, every time the chamber's cover opens by a controlling releasing mechanism (slot machine), a product is removed and the chamber's cover closes.

7. The chamber as it is described in the requirement 1, 2, the entrance of the waiting for feeding products' micro chamber as it is described in the requirement 3. The motor (7) of the mechanical transmition system, of the chamber is activated by the photocell sensors (24, 25, 26, 27) (Figure 8) and the central control device / microprocessor, every time the chamber's cover opens by a controlling releasing mechanism (slot machine), a product is removed and the chamber's cover closes.

8. The chamber as it is described in the requirement 1, 2, the entrance of the feeding micro chamber as it is described in the requirement 3. The motor (7) of the mechanical transmition system, of the chamber is activated by the tracing / movement / presence / position of product's mechanisms (24, 25, 26, 27) (Figure 8) and the central control device / microprocessor, every time the chamber's cover opens, a product is removed and the chamber's cover closes.

9. The chamber as it is described in the requirement 1, 2, the entrance of the feeding micro chamber as it is described in the requirement 3. The motor (7) of the mechanical transmition system, of the chamber is activated by the contact sensors (24, 25, 26, 27) (Figure 8) and the central control device / microprocessor, every time the chamber's cover opens, a product is removed and the chamber's cover closes.

10. The chamber as it is described in the requirement 1, 2, the entrance of the feeding micro chamber as it is described in the requirement 3. The motor (7) of the mechanical transmition system, of the chamber is activated by the fiber optic sensors (24, 25, 26, 27) (Figure 8) and the central control device / microprocessor, every time the chamber's cover opens, a product is removed and the chamber's cover closes.

11. The chamber as it is described in the requirement 1, 2, the entrance of the feeding micro chamber as it is described in the requirement 3. The motor (7) of the mechanical transmition system, of the chamber is activated by the photocell sensors (24, 25, 26, 27) (Figure 8) and the central control device / microprocessor, every time the chamber's cover opens, a product is removed and the chamber's cover closes.

12. The product's reception conveyor (16) is able to support also other products without any change in the constructive geometry (packaged consumer products, foods, drinks) (Figure 10, 11).

13. The product transportation conveyor (Figure 6) moves into guides which are formed on the internal geometry of the chamber's covers (C, D) (Figure 4). The result is that the product transportation guide is driven on a specific trajectory formed on the chamber's geometry (C, D) with predetermined rotation. Chamber's geometry is independent from the outer shell, which includes the geometry. It can be used for a wide reception of packaged consumer products without any change in the geometry of the transportation base (16) (Figure 10, 11).

14. The chamber is possible to have different shaft supporting arrangement (13, 12) and shape occasionally, as well as the transmition motor (7) can be placed either on the upper shaft (13) or on the lower shaft (12) (Figure 4).

15. The chamber, when it is possible, to operate with one transmition shaft (13) as well as with one transmition belt (1) (Figure 9).

16. The products that are for consumption and placed into the chamber can be maintained at low (freezing) or high (heating) temperature depending on the especial demands of preservation or / and consumption of these products. This is achieved by the fitting and connecting on the chamber of a freezing or heating mechanical system. The temperature controlling mechanism is the processing and forced circulation of air in the feeding chamber.
